# EUROPÄISCHE PATENTSCHRIFT

(11) **EP 1 799 515 B1**
(45) Veröffentlichungstag und Bekanntmachung des Hinweises auf die Patenterteilung: **30.09.2009**
(21) Anmeldenummer: 05776053.0
(22) Anmeldetag: 20.07.2005
(51) Int. Cl.: B60R 19/18, B60R 21/34

(54) **VERSTÄRKUNGSELEMENT FÜR EINEN UNTEREN BEREICH EINES FRONTSTOSSFÄNGERS, SOWIE DAMIT AUSGERÜSTETER FRONTSTOSSFÄNGER FÜR EIN KRAFTFAHRZEUG**
REINFORCEMENT ELEMENT FOR A LOWER REGION OF A FRONT BUMPER AND FRONT BUMPER FOR A MOTOR VEHICLE PROVIDED WITH THE SAME
ELEMENT DE RENFORT POUR UNE ZONE INFERIEURE D'UN PARE-CHOCS AVANT ET PARE-CHOCS AVANT EQUIPE DE CET ELEMENT POUR UN VEHICULE AUTOMOBILE

(30) Priorität: 21.07.2004 DE 102004035434
(43) Veröffentlichungstag der Anmeldung: 27.06.2007
(73) Patentinhaber: GM Global Technology Operations, Inc., Detroit, MI 48265-3000 (US)
(72) Erfinder: STELLER, Claus, 64521 Gross-Gerau (DE)
(74) Vertreter: Strauss, Peter
(86) Internationale Anmeldenummer: PCT/EP2005/007918
(87) Internationale Veröffentlichungsnummer: WO 2006/008150

(56) Entgegenhaltungen:
- EP-A- 1 065 108
- EP-A- 1 238 862
- EP-A- 1 241 080
- EP-A- 1 433 664
- WO-A-02/074570
- PATENT ABSTRACTS OF JAPAN Bd. 2000, Nr. 04, 31. August 2000 (2000-08-31) & JP 2000 006739 A (NISSAN MOTOR CO LTD), 11. Januar 2000 (2000-01-11)

## Beschreibung

Die vorliegende Erfindung betrifft ein Verstärkungselement für einen unteren Bereich eines Frontstoßfängers eines Kraftfahrzeugs zum Schutz von Fußgängern beim Aufprall eines unteren Beinabschnitts gegen den unteren Bereich des Frontstoßfängers, nach dem Oberbegriff des Anspruchs 1, sowie einen Frontstoßfänger für ein Kraftfahrzeug mit einem ersten Stoßbe eich, der mit einer Stoßstange eines anderen Kraftfahrzeugs in Kontakt kommen soll, sowie einem unterhalb des ersten Stoßbereichs angeordneten zweiten unteren Stoßbereich, der mit einem Fußgänger mit dessen unteren Beinabschnitt in Kontakt kommen soll, nach dem Oberbegriff des Anspruchs 15.

In den letzten Jahrzehnten hat sich die Automobilindustrie in verstärktem Umfang dem Schutz von Fußgängern bei Unfällen zugewandt. Die Reduzierung von Verletzungsrisiken bei einem Aufprall zwischen einem Kraftfahrzeug und einem Fußgänger hat über die Jahre erheblich an Bedeutung gewonnen.

So wurde beispielsweise bereits vor Jahrzehnten in der DE 30 03 568 OS darüber diskutiert, dass bei einer damals bekannten Stoßschutzvorrichtung der Fußgänger-Schutzteil als gepolsterter Querbalken ausgebildet sein soll, der tiefer als der eigentliche Stoßfänger und noch vor diesem angeordnet ist. Durch diesen unteren Querbalken sollte ein mit dem Fahrzeug kollidierender Fußgänger so tief erfasst werden, dass er nicht umgestoßen und anschließend überfahren, sondern auf den relativ weichen, verformbaren Fahrzeugbug aufgekippt wird, wodurch die Verletzungsgefahr oder zumindest die Schwere der Verletzungen wesentlich reduziert wird. Diese ersten Fußgänger-Schutzteile setzten sich seinerzeit u.a. aufgrund Bedenken der Designer wie auch wegen fertigungstechnischer Schwierigkeiten sowie ob der befürchteten verschlechterten aerodynamischen Eigenschaften und eines befürchteten verschlechterten Abtriebsverhalten der Fahrzeugfront nicht durch.

Ende der 90er Jahre wurde zusammen mit der europäischen Automobilindustrie über eine internationale Regelung zum fahrzeugseitigen Fußgängerschutz diskutiert. Es sollten Tests entwickelt werden, mit denen eine Kraftfahrzeugfrontpartie nach folgenden Kriterien qualitativ beurteilt werden kann: a) Aufprall mit einem Unterschenkel, b) Aufprall mit einem Oberschenkel, c) Aufprall mit der Hüfte, und d) Aufprall mit dem Kopf auf einer Fronthaube eines Kraftfahrzeugs.

Diese Bemühungen der europäischen Automobilindustrie und des Gesetzgebers mündeten schließlich in der Richtlinie 2003/102/EG zum Schutz von Fußgängern und anderen ungeschützten Verkehrsteilnehmern vor und bei Kollisionen mit Kraftfahrzeugen.

Ein Teil der Kriterien zur Bewertung der Qualität von Kraftfahrzeug-Frontpartien gilt den Anforderungen bei einem Aufprall mit einem Unterschenkel. Dabei sollen bei einer Aufprallgeschwindigkeit von 40 km/h folgende Kriterien für den Standard ACEA Phase 1 erfüllt sein: a) ein dynamischer Kniebeugewinkel zwischen Oberschenkel und Unterschenkel soll kleiner als 21° sein, b) eine Scherung im Knie bzw. Knie-Scherverschiebung soll weniger als 6 mm betragen, und c) eine Beschleunigung des Unterschenkels soll kleiner als 200 g (gemessen am oberen Ende des Schienbeins) ausfallen. Weiterhin sollen bei einer Aufprallgeschwindigkeit von 40 km/h folgende Kriterien für den Standard ACEA Phase 2 erfüllt sein: a) ein maximaler dynamischer Kniebeugewinkel zwischen Oberschenkel und Unterschenkel von 15°, b) eine maximale Scherung im Knie bzw. Knie-Scherverschiebung von 6 mm, und c) eine maximale Beschleunigung des Unterschenkels von 150 g (gemessen am oberen Ende des Schienbeins).

Parallel zu den Arbeiten an der Richtlinie 2003/102/EG wurden von der Automobilindustrie unterschiedliche Ausführungsformen von Stoßfängeranordnungen für einen mit einer Verschalung verkleideten Frontbereich eines Personenkraftwagens vorgeschlagen. Verschiedene Beispiele hierfür finden sich u.a. in der EP 1 038 732 B1, in der EP 1 103 428 A2, in der DE 103 04 784 A1, sowie in der EP 1 300 293 A1.

Ferner sind aus der Praxis Frontstoßfänger für Kraftfahrzeuge mit einem ersten Stoßbereich, der mit einer Stoßstange eines anderen Kraftfahrzeugs in Kontakt kommen soll, bekannt geworden, die weiterhin einen unterhalb des ersten Stoßbereichs angeordneten, zweiten Stoßbereich aufweisen sollten, der mit einem Fußgänger mit dessen unteren Beinabschnitt in Kontakt kommen soll. Dabei ist der Stoßfänger mit einer äußeren Schale verkleidet, welche unter anderem ein ansprechendes ästhetisches äußeres Erscheinungsbild sicherstellen und eine gewünschte Aerodynamik garantieren soll. Weiterhin ist der Stoßfänger gegen einen Querträger abgestützt, der mittels Crashboxen oder dergleichen an den Längsträgern der Karosserie montiert ist. Dabei soll der zweite, untere Stoßbereich ein Verstärkungselement aufweisen, welches häufig auch als sogenannter "Lower Bumper Stiffener" (kurz: LBS) für "Pedestrain-Protection Lower Leg Impact" bezeichnet wird bzw. als Verstärkung des unteren Frontstoßfängerbereichs zum Schutz von Fußgängern beim Beinaufprall benannt werden kann.

Eine Ausführungsform eines solchen "Lower Bumper Stiffener" für "Pedestrain-Protection Lower Leg Impact" ist zum Beispiel in der vorstehend bereits zitierten EP 1 038 732 B1 diskutiert. Dabei soll der zweite Stoßbereich vertikal unterhalb des ersten Stoßbereiches, d.h., der obere und der untere Stoßbereich sollen exakt übereinander angeordnet sein, so dass diese nach vorne hin eine gemeinsame senkrechte Frontfläche bilden. Dabei soll der untere Stoßbereich von dem unteren Teil der Stoßstange gebildet sein, die als zweiter unterer Querträger unterhalb des ersten Querträgers an diesem über senkrecht angeordnete Abstandshalter montiert ist. Es bestehen jedoch Bedenken, ob sich mit diesem konstruktiven Aufbau die geltenden strengen Richtlinien für einen zuverlässigen Fußgängerschutz ausreichend erfüllen lassen.

Darüber hinaus ist in der EP 1 038 732 B1 das dort beschriebene Verstärkungselement integraler Bestandteil des unteren Frontstoßfängerbereichs, mit dem es einstückig ausgebildet ist. Dieses integrale Verstärkungselement weist eine mit der Unterseite zum Untergrund weisende Grundplatte auf, die den Frontstoßfänger nach unten hin horizontal abschließt. Auf dieser Grundplatte sind sich von einer Frontwandung des unteren Frontstoßfängers nach hinten in Längsrichtung erstreckende, parallel nebeneinander angeordnete Verstärkungsrippen aufgesetzt.

Derlei bekannte Verstärkungselemente haben jedoch den erheblichen Nachteil, dass diese aufgrund der geringen Höhe des unteren Stoßbereiches über dem Untergrund häufig - z.B. beim Überfahren von hohen Bordsteinen beim Einparken oder z.B. beim Einfahren in ein Parkhaus über Rampen mit abrupten Fahrbahn-Neigungswechseln - erheblichen mechanischen Schlagbelastungen von unten ausgesetzt sind, die zu Rissen führen. Eine Reparatur des integral im Stoßfänger einstückig angeformten Verstärkungselements erfordert den Austausch des gesamten Frontstoßfängers. Dies ist mit erheblichen Kosten verbunden. Die Reparaturkosten steigen zusätzlich in die Höhe, weil die Frontstoßfänger oft in Wagenfarbe lackiert sind. Die notwendigen Lackierarbeiten einschließlich entsprechender Abund Aufrüstarbeiten führen zu einem Nutzungsausfall von mehreren Tagen, was die ersatzweise Nutzung eines Leihwagens bedingt.

Ferner ist in der bereits vorstehend angesprochenen DE 103 04 784 A1 vorgeschlagen worden, den unteren Stoßbereich in Form eines sogenannten Bein-Spoilers auszubilden, der an der Stoßstange angebracht ist, sich abwärts und vorwärts gerichtet von dieser erstreckt und sich zusätzlich über eine hintere, diagonal verlaufende Verstrebung gegen den - hinter dem oberen Stoßbereich des Stoßfängers mit dahinter befindlichem Absorberelement liegenden - Querträger abstützt. Dabei soll eine Vorderkante des Bein-Spoilers unterhalb des Absorberelements der Stoßstange zu liegen kommen, so dass sich in einem gedachten vertikalen Schnitt eine Verbindungslinie zwischen dem oberen Stoßbereich und dem unteren Auftreffpunkt am Bein-Spoiler ergeben könnte, die im besten Fall eine senkrechte Frontfläche erwarten lässt, wie dies bei der vorstehend bereits zitierten EP 1 038 732 B1 der Fall ist, da dort der zweite Stoßbereich vertikal unterhalb des ersten Stoßbereiches liegt, und die im eher ungünstigeren, aber wesentlich wahrscheinlicheren Fall eine leicht schräg nach unten hinten geneigte Aufprallfläche ergibt. Damit wird jedoch ein Umknicken des angefahrenen Beines geradezu begünstigt, statt dafür Sorge zu tragen, dass dieses nach vorne sanft schräg nach oben hochgekippt wird.

Mit dem Bein-Spoiler der DE 103 04 784 A1 sollen in erster Linie Punktbelastungen beim Aufprall eines Fahrzeugs auf einen Unterschenkel reduziert werden. Im Anfangsstadium eines Aufpralls soll die Crashenergie in der Nähe des Knies von dem Dämpfungsmaterial des Absorberelements absorbiert werden, wobei dieses Absorberelement in erster Linie die Stoßkräfte eines aufprallenden Kraftfahrzeugs aufnehmen soll und dementsprechend ausgelegt ist. Der Bein-Spoiler berührt dann den Unterschenkel zu einem späteren Zeitpunkt an einer tieferen Stelle, wobei dann bereits nachteilig eine auf diese Weise nicht zu vermeidende dynamische Beugung des Knies oder ein erstes Verdrehen des Unterschenkels eingetreten sein wird. Der Bein-Spoiler soll dabei eine derartige Steifigkeit aufweisen, dass durch die Aufprallbelastung ein nach rückwärts gerichtetes Verbiegen des Bein-Spoilers nach Art eines Auslegerbalkens bewirkt wird. Beim Verbiegen soll der Bein-Spoiler die Aufprallbelastung absorbieren, bis eine maximale Verbiegung erreicht ist.

Dabei wird jedoch in der DE 103 04 784 A1 der reale Bewegungsablauf bei einem Zusammenprall eines Fußgängers mit einem Kraftfahrzeug verkannt. Es bestehen ferner Zweifel, ob mit diesem konstruktiven Aufbau ein Aufkippen des angefahrenen Fußgängers über die Kraftfahrzeugfront auf die im Vergleich zum Straßenbelag wesentlich nachgiebigere Motorhaube möglich ist. Ein zufriedenstellender Schutz von Fußgängern oder anderen ungeschützten Verkehrsteilnehmern ist damit wohl nicht erzielbar.

Insgesamt liegt also gerade aus Sicht eines verantwortungsvollen Kraftfahrers, der sich auch darüber Gedanken macht, wie er Fußgänger und andere ungeschützte Verkehrsteilnehmer durch in das Auto eingebaute passive Sicherheit schützen kann, eine unbefriedigende Situation vor, welche schließlich eine ablehnende Haltung gegen Kraftfahrzeuge mit derlei ungenügend durchgebildeten Frontstoßfängern erzeugt, die letztlich wiederum eine erfolgreiche Umsetzung entsprechender Maßnahmen zum Schutz von Fußgängern auf breiter Front erschwert.

EP 1 238 862 A2 offenbart ein Verstärkungselement (17) für einen unteren Stoßbereich eines Kraftfahrzeug-Frontstoßfängers zum Schutz von Fußgängern beim Aufprall gegen den unteren Bereich des Frontstoßfängers, wobei das Verstärkungselement sich in Fahrtrichtung hinter dem unteren Bereich des Frontstoßfängers an diesen anschließt. Um eine geeignete Stoßabsorptionswirkung im unteren Stoßfängerbereich mit einer einfachen Struktur und ohne Vergrößerung der Bauteilzahl zu erreichen, weist das sich im wesentlichen in horizontaler Richtung näherungsweise über die Breite des Frontstoßfängers erstreckende Verstärkungselement eine Mehrzahl von hohlen Wülsten auf, die sich zwischen einer quer ausgerichteten Rippe und einer Querstrebe im Wesentlichen in Fahrzeuglängsrichtung erstrecken, um Aufprallkräfte von der Rippe in den Querträger überzuleiten. Das in Fahrtrichtung hintere Ende des Verstärkungselements ist an einer unterhalb des Motorraums angeordnete Querstrebe aufgehängt.

Aufgabe der vorliegenden Erfindung ist, ein Verstärkungselement für einen unteren Bereich eines Frontstoßfängers eines Kraftfahrzeugs anzugeben, das kostengünstig hergestellt, leicht montiert, und im Bedarfsfalle auch preiswert repariert werden kann, bzw. einen Frontstoßfänger mit eben diesen Vorteilen anzugeben.

Diese Aufgabe wird gelöst durch die Merkmale des Anspruchs 1, wie auch durch die Merkmale des Anspruchs 14.

Dabei wird ein Verstärkungselement für einen unteren Bereich eines Frontstoßfängers eines Kraftfahrzeugs zum Schutz von Fußgängern beim Aufprall eines unteren Beinabschnitts, wie beispielsweise der Fessel, dem Schienbein, dem Wadenbein oder einem anderen Abschnitt des Unterschenkels, gegen den unteren Bereich des Frontstoßfängers vorgeschlagen, wobei das Verstärkungselement sich in Fahrtrichtung hinter dem unteren Bereich des Frontstoßfängers an diesen anschließt, eine Grundplatte mit daran befestigten Verstärkungsrippen aufweist, und sich im wesentlichen in horizontaler Richtung näherungsweise über die Breite des Frontstoßfängers erstreckt.

Hierbei wird erstmals vorgeschlagen, dass das Verstärkungselement mit seinem in Fahrrichtung hinteren Ende zumindest teilweise gegen eine unterhalb des Motorraums angeordnete Querstrebe abgestützt ist.

Damit kann in vorteilhafter weise sichergestellt werden, dass bei einem Aufprall eines Fußgängers mit einem Kraftfahrzeug zunächst dessen Unterschenkel in einen möglichst weit unten liegenden Beinabschnitt vom unteren Stoßfängerbereich erfasst und quasi fast zur gleichen Zeit der obere Stoßbereich mit dem Bein des Fußgängers derart in Kontakt kommt, dass ein zuverlässiges Aufkippen des Fußgängers auf die Motorhaube gewährleistet ist, wenn entsprechende Geschwindigkeiten beim Aufprall vorliegen. Dabei ist ein Umknicken des Beines oder gar ein Überfahren des Fußgängers eigentlich nahezu ausgeschlossen. Zugleich ist sichergestellt, dass der untere Stoßbereich in horizontaler Richtung nach hinten eine zuverlässige Abstützung erfährt und damit nicht versehentlich ausweichen kann, so dass eine dynamische Beugung des Knies oder ein Verdrehen des Unterschenkels weitestgehend ausgeschlossen bleiben. Der Kniebiegewinkel kann zudem positiv beeinflusst bzw. möglichst minimal gehalten werden, indem der untere Stoßbereich relativ hart und im Vergleich dazu der obere Stoßbereich relativ weich ausgebildet wird. Ein "auf die Haube lenken" des Fußgängers bzw. ein zuverlässiges Aufkippen des Fußgängers auf die Motorhaube wird dadurch weiterhin begünstigt.

Indem sich der untere Stoßfängerbereich nach hinten zuverlässig abstützt, ist gewährleistet, dass zu jeder Phase eines Aufpralls eines Fußgängers mit dem Kraftfahrzeug klar definierte Aufprallbereiche vorliegen, deren Lage zueinander sich nicht versehentlich ändern kann, so dass die dabei erfolgenden Bewegungsabläufe einem wiederholbaren Muster gehorchen können und somit ein vorbestimmter Erfolg hinsichtlich eines Fußgängerschutzes gewährleistet ist.

Eine möglicherweise überschießende Aufprallenergie wird dabei im unteren Stoßfängerbereich erfolgreich vom Verstärkungselement absorbiert, so dass zudem punktuelle Belastungen ausgeschlossen sind.

Vorteilhafte Weiterbildungen der Erfindung ergeben sich aus den Merkmalen der Unteransprüche.

Entsprechend einer bevorzugten Ausführungsform ist vorgesehen, dass die Querstrebe, gegen welche sich das Verstärkungselement in horizontaler Richtung nach hinten abstützt, Teil eines an der Fahrzeugkarosserie angelenkten Hilfsrahmens ist. Dies bietet den Vorteil, dass der ohnehin im Motorraum verfügbare Hilfsrahmen, der unter anderem den Motor, Teile des Getriebes, oder andere Bauteile abstützt oder trägt, zugleich zum Abstützen des Verstärkungselements in horizontaler Richtung genutzt wird und damit eine Mehrfachnutzung erfährt. Auf diese Weise werden zusätzliche Bauteile gespart. Zudem bietet der Hilfsrahmen den Vorteil, dass er ohnehin für größere Kräfte ausgelegt ist, so dass er nicht zusätzlich verstärkt werden muss. Damit lässt sich in vorteilhafter Weise einerseits die Unfallsicherheit erhöhen und andererseits die Teilevielfalt reduzieren.

In einer weiter bevorzugten Ausführungsform ist vorgesehen, dass das Verstärkungselement mittels, Verkleben, Verklippsen, Verschweißen, Vernieten, Verschrauben oder dergleichen mittelbar oder unmittelbar an der Querstrebe befestigt ist. Dies bietet den Vorteil einer besonders kostengünstigen Befestigungsweise, die mit einfachen Handgriffen bei dem Zusammenbau des Kraftfahrzeugs an der Linie ausgeführt werden kann. Zudem verstärkt sich der vorteilhafte Effekt eines kundendienstfreundlich ausgebildeten, leicht austauschbaren, als separate Platte gefertigten Verstärkungselements, das problemlos montiert, demontiert und ausgetauscht werden kann.

In einer bevorzugten Ausführungsform ist vorgesehen, dass das Verstärkungselement sich mit dessen Rückseite zumindest Abschnittsweise gegen die zugewandte Frontseite der Hilfsrahmen-Querstrebe abstützt und beide Bauteile, die Hilfsrahmen-Querstrebe wie das Verstärkungselement, mittels einer oberhalb und/oder unterhalb dieser beiden Bauteile befindlichen Befestigungsstrebe bzw. eines Montagestreifens miteinander verbunden sind. Damit wird in vorteilhafter Weise sichergestellt, dass bei einem Aufprall auf den unteren Stoßfängerbereich die dabei resultierenden Kräfte ein Verschieben oder gar ein Abtauchen des Verstärkungselementes weder nach hinten unten noch nach hinten oben bewirken können. Vielmehr ist sichergestellt, dass jegliche Kräfte, die auf das Verstärkungselement einwirken, über die Hilfsrahmen-Querstrebe vollständig abgeleitet werden.

Dabei kann das Verstärkungselement in weiter vorteilhafter Weise gewölbt sein und damit den je nach Fahrzeugtyp vorliegenden Packaging-Verhältnissen Rechnung tragen, ohne dass ein daraus möglicherweise resultierender, versetzter Kraftfluss in horizontaler Richtung, der möglicherweise zu einer leichten Tordierung oder Verwindung des nicht planen Verstärkungselements führt, sich letztlich derart negativ auswirken könnte, dass das Verstärkungselement nach oben oder unten Abtauchen oder Ausweichen würde. Folglich bleibt die nach dem Zusammenbau des Kraftfahrzeugs vorgegebene Geometrie - wie von den Konstrukteuren definiert - auch im Falle eines Zusammenstoßes mit einem Fußgänger im wesentlichen erhalten, so dass alle Bauteile, die zur passiven Sicherheit beitragen sollen, ihre Schutzwirkung zuverlässig entfalten können.

Einer weiter bevorzugten Ausführungsform zu Folge ist vorgesehen, dass das Verstärkungselement als separate in den unteren Stoßfängerbereich integrierbare Platte ausgebildet ist. Dies bietet den Vorteil, dass erstmals eine Optimierung des plattenartig ausgebildeten, separaten Verstärkungselements, in Bezug auf dessen mechanische Eigenschaften vorgenommen werden kann, ohne zugleich Schwierigkeiten bei einer Optimierung des ästhetischen Erscheinungsbildes des den Betrachter entgegentretenden Äußeren des Frontstoßfängers befürchten zu müssen. Darüber hinaus kann eine Optimierung der Festigkeit des Verstärkungselements erfolgen, ohne zugleich eine Verschlechterung der aerodynamischen Eigenschaften des Frontstoßfängers in Kauf nehmen zu müssen.

Folglich können erstmals die aerodynamischen Eigenschaften, dass ästhetische Erscheinungsbild, die konstruktive Durchbildung, die Festigkeit wie auch die sonstigen mechanischen Eigenschaften eines Frontstoßfängers bzw. dessen unteren Stoßbereichs separat, unabhängig voneinander optimiert werden, und somit in der Summe ein wesentlich besseres Erscheinungsbild erzielt und zugleich ein wesentlich verbesserter Schutz von Fußgängern gegen Verletzungsgefahr ermöglicht, d.h. letztlich die geforderten Grenzwerte möglichst weit unterschritten werden.

Darüber hinaus bietet das erfindungsgemäße separate plattenartige Verstärkungselement den Vorteil, dass bei einer Beschädigung des Verstärkungselements, beispielsweise aufgrund eines versehentlichen Überfahrens eines besonders hohen Bordsteines oder beim Aufsetzen auf einer Rampe eines Parkhauses, das Verstärkungselement separat ausgetauscht werden kann. Dadurch können die immensen Reparaturkosten reduziert werden. Dies führt zugleich zu einer wesentlichen Steigerung der Akzeptanz eines derart ausgebildeten Kraftfahrzeugs beim Käufer.

Weiterhin bietet der erfindungsgemäße Frontstoßfänger wie auch das dafür vorgesehene erfindungsgemäße Verstärkungselement den Vorteil, dass diese kostengünstiger herzustellen und wesentlich einfacher in der Fertigungslinie zu applizieren sind.

Schließlich kann das Verstärkungselement als separates Bauteil in vorteilhafter Weise wesentlich einfacher auf das jeweilige kraftfahrzeugtypspezifische Stoßfängersystem abgestimmt werden. Dabei ist es auch erstmalig ohne größeren zusätzlichen Aufwand auf ein ähnliches Sondermodell eines Standard-Stoßfängersystems übertragbar. Zudem fallen die Entwicklungs- und Änderungskosten für das Werkzeug zur Herstellung des Verstärkungselements wesentlich günstiger aus, da die hierfür erforderlichen Werkzeuge kleiner bauen. Damit lassen sich die Gesamtkosten für den Frontstoßfänger in vorteilhafter Weise weiter senken.

Entsprechend einer bevorzugten Ausführungsform des Verstärkungselements ist vorgesehen, dass dieses am unteren Stoßfängerbereich ebenfalls wieder lösbar montierbar ist, wie dies bezüglich der Abstützung gegenüber der Querstrebe analog der Fall ist, vorzugsweise mittels Verkleben, Verklippsen, Verschweißen, Vernieten, Verschrauben oder dergleichen. Damit können die vorstehend bereits diskutierten vorteilhaften Effekte eines kundendienstfreundlichen, leicht austauschbaren Verstärkungselements weiter verstärkt werden.

In einer weiter bevorzugten Ausführungsform ist vorgesehen, dass die Verstärkungsrippen sich im montierten Zustand des Verstärkungselements von der oben liegenden, mit der Rückseite zum Motorraum weisenden Grundplatte nach unten erstrecken. Dies bietet den Vorteil, dass ein mit diesem Verstärkungselement ausgerüsteter Frontstoßfänger zum Motorraum hin eine sauber abgeschlossene Fläche anbietet, die keinerlei Angriffspunkte für möglicherweise aufgrund Alterungsprozessen auslaufendem Öl, Kühlmittel vom Kühler oder dergleichen bietet und zudem im normalen Alltagsgebrauch sicherstellt, dass durch den Motorraum eindringender oder von der Fahrbahn aufgewirbelter Schmutz, Spritz-, Dreck- oder Regenwasser problemlos über die ebene Fläche des Verstärkungselementrückens abfließen kann, dort nicht in irgendwelchen Kammern haftet oder sich dort absetzt und letztlich beispielsweise im Winter zu Frostschäden oder dergleichen führt.

Die Grundplatte des Verstärkungselements soll zwar bevorzugt nach unten abstehende Rippen aufweisen, diese können aber auch teilweise nach oben abstehen. Die Grundplatte braucht nicht absolut eben zu sein, sondern kann z.B. als leicht gewölbte Platte sich mit ihrer Geometrie den vorliegenden Package-Verhältnissen des Kraftfahrzeuges anpassen. Die Rippen können an der Grundplatte angesteckt, angenietet, angeschraubt, angespritzt, angeformt, aufgeklebt oder als Zusammenbauteil mit dieser verbunden sein. Die Verstärkungs- bzw. Versteifungsrippen können bezüglich deren Abstand zueinander, hinsichtlich deren Materialstärke, Bauhöhe, Länge, Lage, Ausrichtung und Verbindungen untereinander (z.B. als Diagonalrippen, Querrippen, Kreuzrippen oder dergleichen) für eine optimale Erzielung der "lower leg"-Fußgängerschutzvorgaben unter Berücksichtigung der fahrzeugspezifischen Gegebenheiten optimal aufeinander abgestimmt werden. Die Verstärkungsrippen brauchen nicht zwingend geradlinig zu verlaufen.

Entsprechend einer weiter bevorzugten Ausführungsform ist vorgesehen, dass das Verstärkungselement zumindest teilweise mit einem in Fahrtrichtung vorderen Abschnitt vom unteren Stoßfängerbereich schalenartig umhüllt ist. Dies bietet den Vorteil einer optimalen aerodynamischen Ummantelung bzw. Einhüllung des plattenartig ausgebildeten Verstärkungselementes. Zugleich ergibt die Verbindung aus schalenartiger Umhüllung des Stoßfängerbereichs mit dem Stärkungselement eine besonders versteifte und stabile Konstruktion, so dass die geforderten Grenzwerte für den Fußgängerschutz besonders gut eingehalten werden können.

Gemäß einer weiter bevorzugten Ausführungsform ist vorgesehen, dass sich die Verstärkungsrippen im Wesentlichen rechtwinklig von der Grundplatte erstrecken und aus dem selben Material einstückig an diese angeformt sind. Damit kann in vorteilhafter Weise das Verstärkungselement als Einbauteil aus dem selben Material extrem kostengünstig hergestellt werden, beispielsweise als Kunststoffspritzgussteil oder dergleichen.

Einer weiter bevorzugten Ausführungsform zufolge ist vorgesehen, dass in der Grundplatte und/oder zwischen den Verstärkungsrippen Befestigungspunkte, vorzugsweise Einrastnasen oder dergleichen Rast- bzw. Einklipsmittel, ausgebildet sind. Dies bietet eine besonders kostengünstige Befestigungsmöglichkeit des Verstärkungselements im unteren Bereich des Frontstoßfängers. Hierzu ist weiter vorgesehen, dass die Befestigungspunkte in der Grundplatte bzw. zwischen den Rippen mit entsprechenden Befestigungspunkten in der Schale des unteren Stoßfängerbereichs, die vorzugsweise als Einrastöffnungen ausgebildet sind, korrelieren. Damit lassen sich die zur Montage des erfindungsgemäßen Frontstoßfängers erforderlichen Handgriffe wesentlich reduzieren. Somit wird in vorteilhafter Weise sichergestellt, dass das erfindungsgemäße Verstärkungselement, welches als separate, in den unteren Stoßfängerbereich integrierbare Platte vorliegt, problemlos mit einem Handgriff in dem unteren Stoßfängerbereich durch Einrasten integriert werden kann. Eine Vereinfachung der Fertigungstiefe sowie der Montageabläufe in der Linie ist ein weiterer positiver Effekt.

Ferner ist vorgesehen, dass die Grundplatte im Fahrzeuglängsrichtung hinteren Bereich kreuzförmig ausgebildete Verstärkungsrippen aufweist, an die sich nach vorne hin parallel zueinander angeordnete, im wesentlichen in Längsrichtung orientierte Längsrippen anschließen. Dies bietet den Vorteil, dass das plattenartige Verstärkungselement im übertragenen Sinne wie eine Art Hand ausgebildet ist, von deren Handwurzel sich die rippenartigen Finger nach vorne erstrecken, deren Fingerspitzen die Aufprallkräfte vom unteren Stoßfängerbereich aufnehmen, dabei den Aufprall mildern und die Aufprallenergie kontrolliert über die Handwurzel ableiten. Damit ergibt sich ein optimaler Kraftfluss und ein besonders guter Schutz der betroffenen Person beim Aufprall.

Des weiteren ist vorgesehen, dass die Grundplatte auf deren rückwärtiger, dem Motorraum zugewandter Seite eine Kühlerabweiseinrichtung trägt. Damit wird in vorteilhafter Weise bei einem Aufprall sichergestellt, dass der Kühler an entsprechenden Sollbruchstellen abgeschert bzw. losgerissen wird und sich frei nach hinten bewegen kann, anstatt nach unten abzutauchen oder gegen den Motorblock gepresst zu werden. Dabei bleibt der Kühler funktionstüchtig und mit dem Fahrzeug kann die Fahrt aus eigener Kraft zumindest noch bis zur nächsten Werkstatt fortgesetzt werden. Damit kann vorteilhaft ggf. auf einen Pannendienst verzichtet werden. Zudem können die Vorgaben des sogenannten "Danner Tests" damit eingehalten werden. Schließlich ergibt sich ein verbessertes Schadensbild und dementsprechend eine günstigere Einstufung des Fahrzeugs bei den Versicherungsgesellschaften.

Schließlich ist vorgesehen, dass das Verstärkungselement aus Kunststoff, vorzugsweise aus thermoplastischen Kunststoff hergestellt ist. Dies bietet einerseits in vorteilhafter Weise eine kostengünstige Herstellung und andererseits den weiteren Vorteil einer Fertigung beispielsweise im Rahmen eines Kunststoffspritzgussverfahrens, was ebenfalls wiederum Kosteneinsparungseffekte realisieren lässt. Zudem können derartige Kunststoffteile komplex aufgebaut sein, hohe Festigkeiten erzielen, gleichzeitig leicht bauen und damit kein unnötiges Gewicht für das Fahrzeug bedeuten.

Die Grundplatte des Verstärkungselements wie auch dessen Rippen können zur weiteren Gewichtsreduzierung partiell mit Löchern oder Ausschnitten versehen sein. Das Verstärkungselement wird zwar bevorzugt aus Kunststoff hergestellt sein, besonders bevorzugt wird man u. a. aus Gründen der besonders guten Formbarkeit thermoplastische Kunststoffe verwenden. Statt dessen können jedoch auch GFK-, CFK oder andere Verbundwerkstoffe bzw. stabile aber zugleich leichte Materialien zum Einsatz gelangen. Es können ggf. Materialverstärkungen, z.B. Füllstoffe z.B. auch aus Metall, Inlets, Inserts oder dergleichen zur weiteren Aussteifung des Verstärkungselements vorgesehen werden.

Die vorstehend diskutierte Aufgabe wird weiterhin dadurch gelöst, dass ein Frontstoßfänger für ein Kraftfahrzeug mit einem ersten Stoßbereich, der mit einer Stoßstange eines anderen Kraftfahrzeugs in Kontakt kommen soll, vorgeschlagen wird. Weiterhin weist dieser Frontstoßfänger einen unterhalb des ersten Stoßbereichs angeordneten zweiten Stoßbereich auf, der mit einem Fußgänger mit dessen unteren Beinabschnitt in Kontakt kommen soll. Dabei ist der Stoßfänger mit einer äußeren Schale verkleidet und stützt sich im ersten Stoßbereich gegen einen Querträger ab, der mittels Crashboxen oder dergleichen an den Längsträgern der Karosserie montiert ist.

Dabei wird erstmals vorgeschlagen, dass in Fahrzeuglängsrichtung hinter dem zweiten, unteren Stoßbereich ein Verstärkungselement vorgesehen ist, wie vorstehend diskutiert. Dabei soll sich das Verstärkungselement erstmals mit dessen in Längsrichtung hinterem Ende zumindest teilweise gegen eine unterhalb des Motorraums befindliche Querstrebe abstützen. Damit lassen sich die vorstehend diskutierten Vorteile in synergetischer Weise auch mit einem so ausgebildeten Frontstoßfänger erzielen. Insoweit wird auf die obigen Erläuterungen verwiesen.

Die vorstehend diskutierte Erfindung wird nachfolgend in Ausführungsbeispielen anhand der Figuren der Zeichnung näher erläutert. Es zeigt:

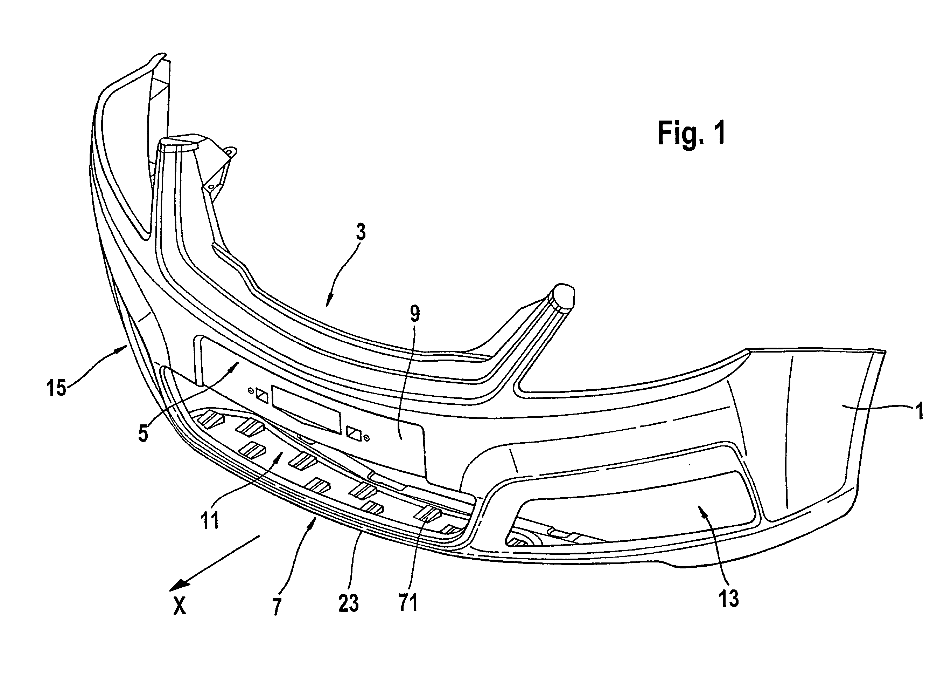

- Fig. 1: In einer dreidimensionalen Ansicht schräg von Vorne eine beispielhafte Ausführungsform einer als Formteil ausgebildeten äußeren Schale bzw. Verkleidung eines Stoßfängers mit einem oberen und einem unteren Stoßbereich;

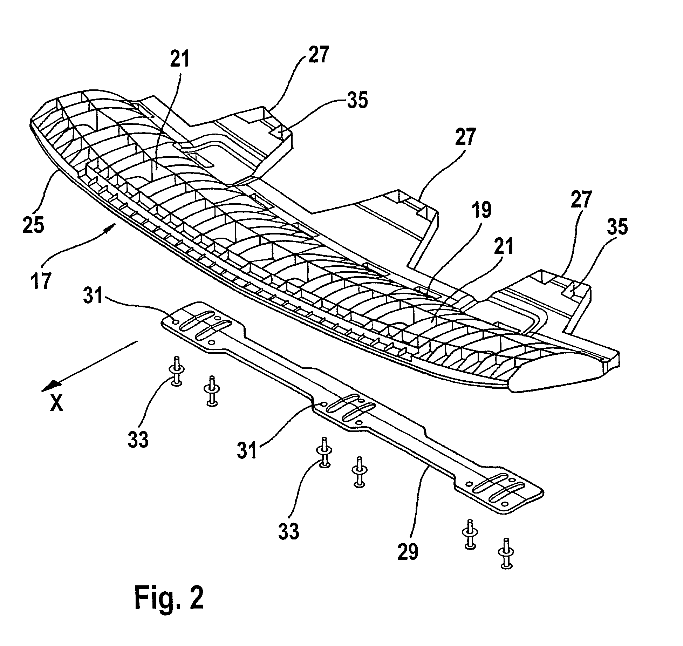

- Fig. 2: In einer dreidimensionalen Ansicht schräg von Vorne eine beispielhafte Ausführungsform eines Verstärkungselements, das als separate, in den unteren Stoßfängerbereich integrierbare Platte ausgebildet ist, wobei die dargestellte Ausführungsform eine Grundplatte aufweist, die auf beiden Seiten (unten und oben) über eine Gitterstruktur bzw. Verstärkungsrippen verfügt;

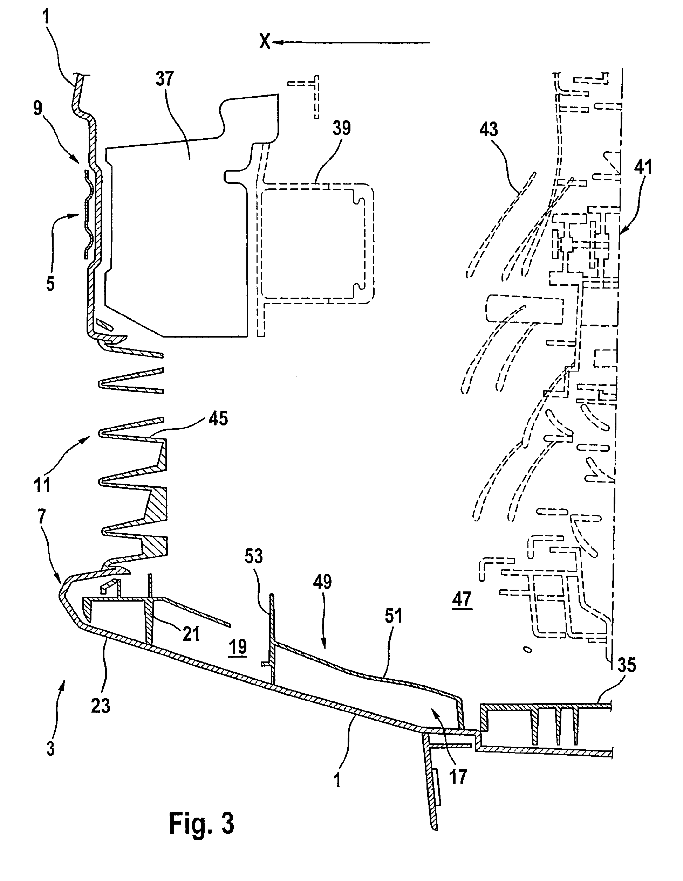

- Fig. 3: Einen vertikalen Schnitt in einer ersten sich in Längsrichtung erstreckenden Ebene parallel nahe bei der Fahrzeugmitte durch die in Fig. 1 gezeigte Stoßfängerschale mit darin im unteren Stoßfängerbereich integriertem, in Fig. 2 gezeigtem Verstärkungselement, sowie einem zwischen dem oberen und unteren Stoßbereich unterhalb eines im oberen Stoßbereich mit enthaltenen Nummernschildbereichs eingesetzten Lufteinlassgitter, sowie einem als Formteil ausgebildeten, zwischen dem oberen Stoßbereich der Stoßfängerschale und einem dahinter angeordneten Querträger (gestrichelt dargestellt) angeordnetem Absorberelement;

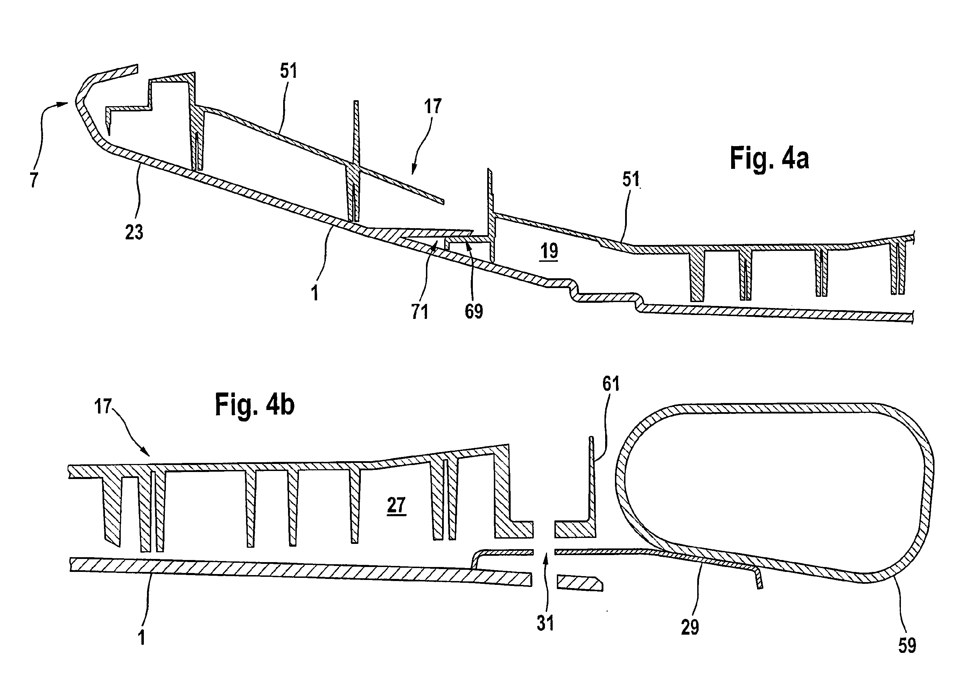

- Fig. 4: In zwei Teilansichten a) und b) jeweils einen vergrößerten, schematisch vereinfachten Schnitt des in Fig. 1 bis 3 gezeigten Stoßfängers, wobei in Teilansicht a) eine Verrastung zwischen dem Verstärkungselement und der Stoßfängerschale und in Teilansicht b) die Anbindung an die Querstrebe geschnitten verdeutlich ist;

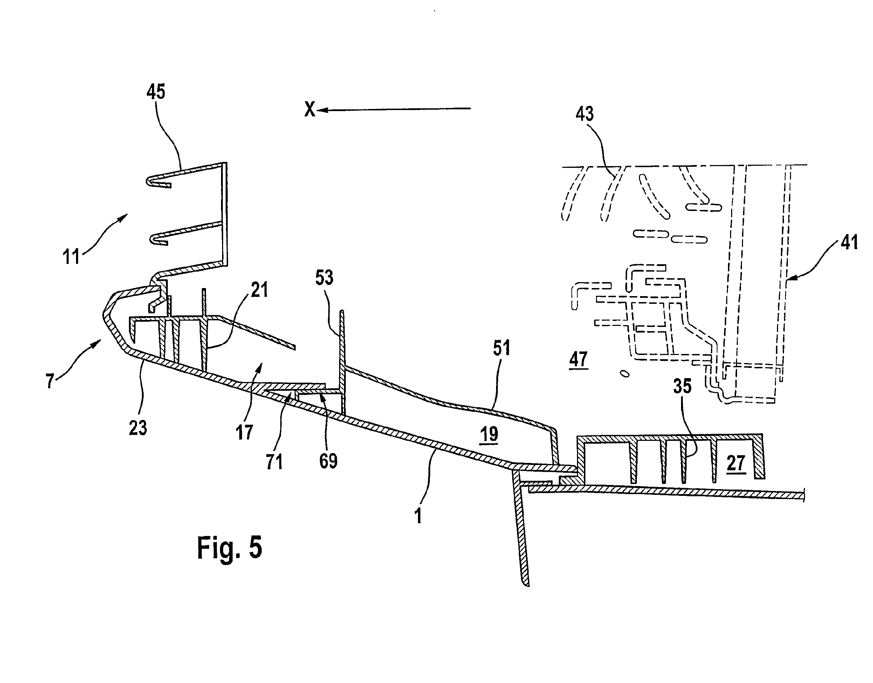

- Fig. 5: Einen vertikalen Schnitt in einer weiteren sich in Längsrichtung erstreckenden zweiten Ebene in Fahrzeugmitte durch die in Fig. 1 gezeigte Stoßfängerschale mit darin im unteren Stoßfängerbereich integriertem, in Fig. 2 gezeigtem Verstärkungselement mit gestrichelt angedeutetem Kühler, wobei eine Verrastung des Verstärkungselements im Schnitt gezeigt ist;

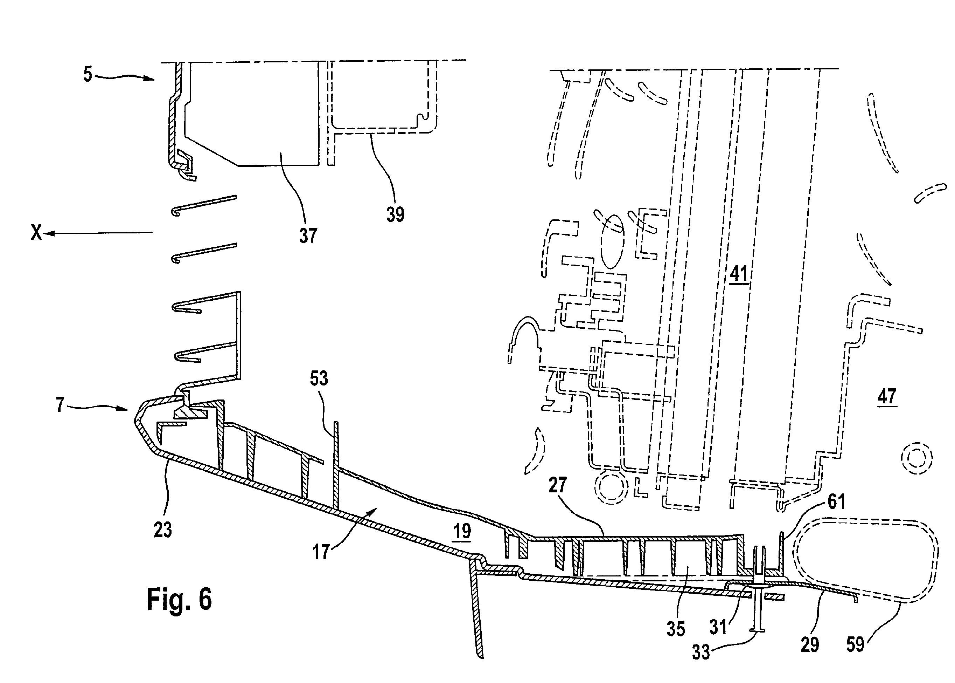

- Fig. 6: Einen vertikalen Schnitt in einer weiteren sich in Längsrichtung erstreckenden dritten Ebene knapp vor der Fahrzeugmitte durch die in Fig. 1 gezeigte Stoßfängerschale mit darin im unteren Stoßfängerbereich integriertem, in Fig. 2 gezeigtem Verstärkungselement mit gestrichelt angedeuteter hinterer Abstützung des Verstärkungselements gegen eine unterhalb des Kühlers angeordnete im Schnitt gestrichelt dargestellte Strebe; und

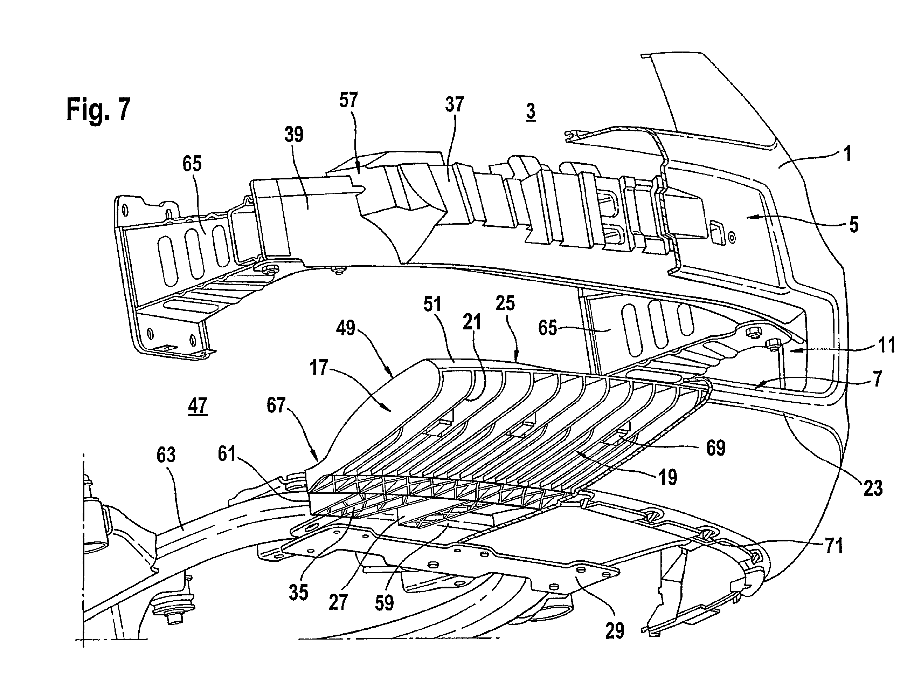

- Fig. 7: In einer dreidimensionalen Ansicht schräg von Vorne unten die in Fig. 1 bis 6 gezeigte
Ausführungsform eines Frontstoßfängers mit im unteren Stoßbereich der Stoßfängerverkleidung integriertem, separatem Verstärkungselement, einschließlich dessen hintere Abstützung gegen einen unterhalb des Motorraums angeordneten Hilfsrahmen.

In Fig. 1 ist in einer dreidimensionalen Ansicht schräg von vorne eine beispielhafte Ausführungsform einer z.B. als Formteil ausgebildeten äußeren Schale bzw. Verkleidung 1 eines Stoßfängers 3 mit einem oberen Stoßbereich 5 und einem unteren Stoßbereich 7 gezeigt. Die Verkleidung bzw. Schale 1 des Stoßfängers 3 ist einstückig z.B. aus thermoplastischem Kunststoff hergestellt und kann in Wagenfarbe lackiert sein. Im oberen Stoßbereich 5 befindet sich eine Aussparung 9 zur Aufnahme eines nicht näher dargestellten Kennzeichens. Darunter ist eine Öffnung 11 erkennbar, die als Luftdurchlass für den hinter dem Stoßfänger 3 angeordneten, nicht näher dargestellten Kühler dient. Die Verkleidung bzw. Schale 1 erstreckt sich im wesentlichen über die gesamte Breite des Kraftfahrzeugs und zieht sich z.B. bis über dessen vordere Ecken zur Seite hin. Links und rechts von der Luftdurchlassöffnung 11 sind weitere Öffnungen 13 und 15 vorgesehen, die z.B. zur Aufnahme von tief sitzenden Beleuchtungsmitteln, wie beispielsweise Nebelleuchten, Blinker oder dergleichen dienen können Die Öffnungen 13 und 15 können auch mit Gittern versehen werden und als weitere Luftdurchlassschlitze dienen.

Der untere Stoßbereich 7 ist im montierten Zustand des Stoßfängers 3 in einer Höhe über dem Boden bzw. über der Fahrbahn angeordnet, die in etwa der Mitte des Unterschenkels eines normal gewachsenen Menschen entspricht. Der untere Stoßbereich 7 kann leicht über den oberen Stoßbereich 5 nach vorne hervorstehen. Ferner kann die Unterkante der unteren Luftdurchlassöffnung 11 in Längs- bzw. Fahrtrichtung X in etwa gleich weit vorstehen, wie die Oberkante der Luftdurchlassöffnung 11. Es ist sichergestellt, dass bei einem versehentlichen Anfahren eines Fußgängers dieser zuerst so tief im Bereich des Unterschenkels erfasst wird, dass er nicht umgestoßen und anschließend überfahren werden kann, sondern auf den relativ weichen, verformbaren Fahrzeugbug bzw. die Motorhaube aufgekippt wird, wodurch die Verletzungsgefahr oder zumindest die Schwere der Verletzung wesentlich reduziert wird. Dabei wird zugleich eine unerwünschte Beugung des Unterschenkels gegenüber dem Oberschenkel im Kniebereich verhindert.

Um das vorgenannte Aufkippen eines versehentlich erfassten Fußgängers über den Kraftfahrzeugbug auf die Motorhaube zu gewährleisten, muss jedoch der untere Stoßbereich 7 eine bestimmte Steifigkeit aufweisen, welche alleine von der Verkleidung bzw. Schale 1 des Stoßfängers 3 so nicht geleistet werden kann. Die erforderliche Steifigkeit wird mit dem Verstärkungselement 17 erzielt. Das Verstärkungselement 17 wird in den Rasthaken 71 eingerastet.

In Fig. 2 ist in einer dreidimensionalen Ansicht schräg von vorne eine beispielhafte Ausführungsform eines solchen Verstärkungselements 17, das als separate, in den unteren Stoßfängerbereich 7 integrierbare Platte 19 ausgebildet ist, gezeigt.

Die Verstärkungsplatte 19 weist in der hier dargestellten Ausführungsform zur Veranschaulichung der Verstärkungs- bzw. Versteifungsrippen 21 eine Grundplatte auf, die auf beiden Seiten der Grundplatte, also oben und unten, Rippen trägt. Die Grundplatte kann gleichwohl je nach Ausführungsform und Anwendungsfall bzw. gewünschter Festigkeit, etc., oberhalb und/oder unterhalb der Verstärkungsrippen 21 angeordnet sein. Es ist auch eine Ausführungsform denkbar, bei der auf beiden Seiten von den Verstärkungsrippen 21 Grundplatten angeordnet sind; wie hier schematisch vereinfacht dargestellt. In einer bevorzugten Ausführungsform sind die Versteifungsrippen 21 und die oberhalb der Rippen angeordnete Grundplatte einstückig aus einem thermoplastischen Kunststoff hergestellt.

Die Verstärkungsrippen 21 können sich in Längsrichtung X des Kraftfahrzeugs erstrecken und parallel nebeneinander angeordnet sein. Es können sich auch Verstärkungsrippen partiell quer dazu erstrecken. Es sind ferner im hinteren Bereich der Verstärkungsplatte 19 sich kreuzende Rippen zur weiteren Versteifung der Platte 19 vorgesehen.

Das Verstärkungselement 17 erstreckt sich im Wesentlichen in horizontaler Richtung näherungsweise über die Breite des Frontstoßfängers 3. Das Verstärkungselement 17 ist als separate, in den unteren Stoßfängerbereich 7 integrierbare Platte 19 ausgebildet. Die Platte 19 muss nicht absolut eben ausgebildet sein, sondern kann mit dessen Kontur an die vorgegebenen Verhältnisse und die jeweilige packaging Situation des Kraftfahrzeugs angepasst werden.

Das Verstärkungselement 17 ist am unteren Stoßfängerbereich 7 mittels Verkleben, Verklippsen, Verschweißen, Vernieten, Verschrauben oder dergleichen montierbar. Die Verstärkungsrippen 21 erstrecken sich im montierten Zustand des Verstärkungselements 17 von der beispielsweise oben liegenden, mit der Rückseite zum nicht näher dargestellten Motorraum weisenden Grundplatte nach unten. Das Verstärkungselement 17 wird zumindest teilweise mit dem in Fahrtrichtung X vorderen Abschnitt 23 vom unteren Stoßfängerbereich 7 schalenartig umhüllt.

Das Verstärkungselement 17 wird dabei mit dessen vorderem Abschnitt 25 in den vorderen Abschnitt 23 integriert und über an dessen hinterem Ende angeordneten Armen 27 gegen ein Befestigungselement 29 abgestützt, welches sich seinerseits z.B. gegen einen entsprechenden Träger oder eine entsprechende Querstrebe abstützen kann. Der Befestigungsstreifen bzw. die Befestigungsstrebe 29 ist als langgezogene Montageplatte ausgebildet, die über Bohrungen 31 verfügt, durch welche entsprechende Befestigungsmittel 33, wie beispielsweise Schrauben, Bolzen, Nieten, Steckstifte oder dergleichen hindurch gesteckt und damit eine feste Verbindung mit dem Verstärkungselement 17 hergestellt werden kann. Hierfür weisen die Arme 27 entsprechende Durchgangsöffnungen oder Aussparungen auf. Die Arme 27 sind im hinteren Bereich der Verstärkungsplatte 19 in der hier dargestellten Ausführungsform an dieser einstückig angeformt und verfügen über Versteifungsrippen 35.

Der in Fig. 1 dargestellte Stoßfänger 3 und das in Fig. 2 gezeigte Verstärkungselement 17 sind in Fig. 3 in einem vertikalen Schnitt durch eine in Längsrichtung X liegende, parallel zur Fahrzeugmitte angeordnete Ebene gezeigt. Dabei sind die Stoßfängerschale 1 und das darin integrierte Verstärkungselement 7 im Schnitt mit durchgezogenen Linien dargestellt. Weiterhin sind in Fig. 3 der Querträger 39 sowie ein Kühler 41 mit dessen Lüfterrad 43 gestrichelt dargestellt. Zwischen dem oberen Stoßbereich 5 der Verkleidung 1 des Stoßfängers 3 und dem Querträger 39 ist ein Absorberelement 37 angeordnet um Crashenergie zu absorbieren. Der Querträger 39 stützt sich seinerseits über hier nicht näher dargestellte Crashboxen gegen Längsträger ab.

Die Luftdurchlassöffnung 11, durch welche Luft zum Kühler 41 einströmen kann, ist mit einem Gitter 45 verkleidet, welches in die Schale 1 eingeklippst ist.

Das Verstärkungselement 17 weist auf der dem Motorraum 47 zugewandten Rückseite 49 eine Grundplatte 51 auf, von der sich die Verstärkungsrippen 21 im wesentlichen rechtwinklig nach unten erstrecken und bei der dargestellten Ausführungsform aus dem selben Material einstückig an der Grundplatte 51 angeformt sind.

Die Verstärkungsplatte 19 weist auf der rückwärtigen Seite 49 der Grundplatte 51 eine dem Motorraum 47 zugewandte Kühlerabweiseinrichtung 53 auf, welche sicherstellt, dass im Falle eines Aufpralls beim Eindrücken des Stoßfängers 3 der Kühler 41 sich aus seiner Verankerung lösen kann, funktionstüchtig bleibt und nicht nach unten abtaucht.

In Fig. 4 ist in zwei schematisch vereinfachten, vergrößerten Schnittansichten in einer Teilansicht a) eine vordere Anbindung des Verstärkungselements 17 an die Schale 1 des Stoßfängers 3 sowie in Teilansicht b) eine hintere Anbindung des Verstärkungselements 17 an eine Querstrebe 59 verdeutlicht.

Das Verstärkungselement 17 ist im unteren Bereich 7 des Frontstoßfängers 3 in dessen vorderen Abschnitt 23 mit dem beispielsweise als Einrastnase ausgebildeten Einrastelement 69 in eine damit korrelierende Einrastöffnung 71 eingerastet bzw. eingeklippst. Das hintere Ende des Verstärkungselements 17 ruht mit einer Schulter 61 des Armes 27 vor der Querstrebe 59. Dabei ist der Arm 27 mit dem Verbindungselement bzw. der Befestigungsstrebe 29 an der Querstrebe 59 befestigt, wobei das hintere Ende der Stoßfängerschale 1 als äußere Hülle zugleich vom Verbindungselement 29 gehalten bzw. an diesem befestigt ist. Das Verstärkungselement 17, die Befestigungsstrebe 29 und die Schale 1 werden dabei mit einem nicht näher dargestellten Befestigungsmittel (vgl. z.B. Fig. 2 oder 6, dortige Bezugsziffer 33), das durch die gemeinsame Öffnung geführt wird, miteinander verbunden.

In Fig. 5 ist in einem vertikalen Schnitt in einer weiteren sich in Längsrichtung X erstreckenden zweiten Ebene in Fahrzeugmitte durch die in Fig. 1 gezeigte Stoßfängerschale 1 mit darin im unteren Stoßfängerbereich 7 integrierten, in Fig. 2 gezeigten Verstärkungselement 17 mit gestrichelt angedeutetem Kühler 41, gezeigt. Wie aus Figuren 2 bis 5 deutlich wird, weist das Verstärkungselement 17 verschiedene Verstärkungsrippen 27 auf. Die Grundplatte 51 des Verstärkungselements 17 trägt im in Fahrzeuglängsrichtung hinteren Bereich beispielsweise kreuzförmig ausgebildete Verstärkungsrippen 35. Nach vorne hin sind die Verstärkungsrippen beispielsweise im wesentlichen parallel zueinander angeordnet und erstrecken sich im wesentlichen in Längsrichtung X. Es sind zudem teilweise zur weiteren Ausstärkung Querrippen vorgesehen, die im Schnitt nicht erkennbar sind. Zum Teil deuten die Linien auch die auslaufenden Spitzen der Längsrippen 21 an. Weiterhin ist eine im Verstärkungselement 17 zwischen den nach unten weisenden Rippen 21 enthaltene, beispielhafte Einrastnase 69 im Schnitt dargestellt.

In Fig. 6 ist ein weiterer Schnitt in einer vierten Ebene knapp vor der Fahrzeugmitte dargestellt, mit gestrichelt angedeuteter, hinterer Abstützung des Verstärkungselements 17 gegen eine unterhalb des Kühlers 41 angeordnete, im Schnitt gestrichelt dargestellte Strebe 59. Das plattenartig ausgebildete Verstärkungselement 17 ist in dessen hinterem Bereich an der Querstrebe 59 mit dem länglich ausgebildeten Befestigungselement bzw. der Befestigungsstrebe 29 abgestützt, wobei die Befestigungsstrebe 29 mittels Klipse, Niete, Bolzen oder dergleichen Befestigungsmittel 33, die durch eine Bohrung 31 hindurch ragen, im hinteren Bereich des Verstärkungselements 17 an wenigstens einem Arm 27 befestigt ist. Dabei kann sich der Arm 27 der Verstärkungsplatte 19 entweder, wie hier dargestellt, mittels der Befestigungsstrebe 29 unterhalb der Querstrebe 59 an dieser abstützen, oder auch oberhalb dieser befestigt sein. Wesentlich ist dabei, dass das Verstärkungselement 17 sich in Längsrichtung X rückwärts derart gegen die Querstrebe 59 oder ein ähnliches Bauteil mit seiner rückwärtigen Kante 61 bzw. mit entsprechenden Abschnitten abstützen kann, dass die Verstärkungsplatte 19 bei einer Belastung in Längsrichtung nicht nach oben oder unten ausweicht.

Wie aus Fig. 1 bis 6 ersichtlich ist, ragt der untere Stoßbereich 7 über den oberen Stoßbereich 5 hervor, so dass sicher gestellt ist, dass der untere Beinbereich eines versehentlich erfassten Fußgängers zuerst mit dem Stoßfänger 3 in Kontakt kommt.

In Fig. 7 ist in einer schematisch vereinfachten dreidimensionalen Ansicht schräg von vorne unten die in Fig. 1 bis 6 gezeigte Ausführungsform eines Frontstoßfängers 3 mit dem im unteren Stoßbereich 7 der Stoßfängerverkleidung 1 integrierten, separaten Verstärkungselement 17, einschließlich dessen hinterer Abstützung gegen einen unterhalb des Motorraums 47 angeordneten Hilfsrahmen 63 nochmals veranschaulicht.

Das in Fig. 7 gezeigte Frontstoßfängersystem eines Kraftfahrzeuges weist den häufig auch als Frontaufprallbegrenzer oder "front bumper beam" bezeichneten Querträger 39 auf. Am Querträger 39 sind links und rechts sogenannte Halter bzw. "brackets" oder Crashboxen 65 montiert, über die sich der Querträger 39 gegen nicht näher dargestellte Längsträger des Kraftfahrzeuges abstützt. In Fahrtrichtung X vor dem Aufprallbegrenzer bzw. Querträger 39 ist der sog. Aufprall-Energieabsorber bzw. das Absorberelement 37 angeordnet, welches beispielsweise aus einem E-PP Schaumteil gebildet sein kann. Vor dem Absorberelement 37 befindet sich wiederum die Verkleidung 1 für den Frontstoßfänger 3, wobei die Stoßfängerverkleidung 1 häufig auch als "bumper fascia" bezeichnet wird. Der unterhalb der unteren Kühlluftöffnung 11 befindliche untere Teil 7 der Stoßfängerverkleidung 1 bildet für sich alleine zunächst einen unverstärkten Stoßfänger-Abschnitt und wird in der hier dargestellten Ausführungsform nach hinten ebenfalls am Hilfsrahmen 63 bzw. an dessen Querstrebe 59 befestigt.

Das häufig auch als "lower bumper stiffener" (kurz: LBS) bezeichnete Verstärkungselement 17 ist im unteren Teil 7 der Stoßfängerverkleidung 1 angeordnet und dort eingeklippst. Im Zusammenwirken mit dem Absorberelement 37 vor dem Querträger 39 sorgt das Verstärkungselement 17 dafür, dass die strengen "lower leg"-Fußgängerschutzvorgaben erfüllt werden können. Durch die Gegenstütze bzw. die streifenartig ausgebildete Befestigungsstrebe 29, die am Hilfsrahmen 63 bzw. an dessen Querstrebe 59 befestigt ist, kann das Verstärkungselement 17 nicht unter dem Hilfsrahmen 63 wegtauchen, sondern stützt sich bei einem Aufprall mit dessen hinterer Kante 61 bzw. mit dessen hinterem Ende 67 an der Querstrebe 59 des Hilfsrahmens 63 ab. Hierbei wird der Hilfsrahmen 63 häufig auch als "subframe" bezeichnet.

Das Verstärkungselement 17 kann eine Grundplatte 51 mit beispielsweise nach oben/oder nach unten abstehenden Rippen 21 aufweisen. In der hier dargestellten, bevorzugten Ausführungsform erstrecken sich die Rippen 21 von der Grundplatte 51 nach unten. Die Grundplatte 51 muss dabei nicht eben sein, sondern kann sich in ihrer jeweiligen Geometrie den Package-Verhältnissen des jeweiligen Kraftfahrzeuges anpassen. Die Verstärkungsrippen 21 können an der Grundplatte 51 angespritzt, oder als Zusammenbauteil mit dieser verbunden sein. Die Verstärkungsrippen 21 bzw. die hinteren Versteifungsrippen 35 der hinteren Arme 27 der Verstärkungsplatte 19 können bezüglich deren Abstand zueinander, hinsichtlich deren Materialstärke, Bauhöhe, Länge, Lage, Ausrichtung und Verbindungen untereinander (z.B. Diagonalrippen, Querrippen, Kreuzrippen oder dergleichen) für eine optimale Erzielung der "lower leg"-Fußgängerschutzvorgaben unter Berücksichtigung der fahrzeugspezifischen Gegebenheiten optimal aufeinander abgestimmt werden. Dabei müssen die Verstärkungsrippen 21 bzw. die Versteifungsrippen 35 nicht zwingend geradlinig verlaufen.

Die Grundplatte 51 und die Rippen 21 bzw. 35 können zur Gewichtsreduzierung partiell mit Löchern oder Ausschnitten versehen sein. Das plattenartig ausgebildete Verstärkungselement 17 ist als Verstärkungsplatte 19 beispielsweise aus Kunststoff hergestellt, besonders bevorzugt wird thermoplastischer Kunststoff verwendet. Alternativ könnte man auch GFK-, CFK oder andere Verbundwerkstoffe bzw. stabile aber zugleich leichte Materialien in Erwägung ziehen. Dabei können im Bedarfsfalle Materialverstärkungen, wie beispielsweise Füllstoffe auch aus Metall, Inlets, Inserts oder dergleichen vorgesehen sein. Als separates Einzelteil lässt sich das Verstärkungselement 17 kundendienstfreundlich austauschen. Das Verstärkungselement 17 kann mit dessen vorderem Abschnitt 25 in den vorderen Abschnitt 23 der unteren Stoßfängerverkleidung 7 eingeschoben und mit dieser verklippst, verschweißt, vernietet und/oder verschraubt werden.

In Fig. 7 sind die im Verstärkungselement 17 zwischen den nach unten weisenden Verstärkungsrippen 21 enthaltenen Einrastnasen 69 schwach erkennbar. Mit den Einrastnasen wird das Verstärkungselement 17 im unteren Bereich des Frontstoßfängers in damit korrelierende, schwach erkennbare Einrastöffnungen 71 eingerastet oder eingeklippst.

Die Gegenstütze bzw. Befestigungsstrebe 29, die sich quer zur Fahrzeuglängsrichtung X erstreckt, kann in ihrer Form der jeweiligen Geometrie der Package-Verhältnissen des Kraftfahrzeuges angepasst werden. Falls erforderlich können in der Befestigungsstrebe 29 aussteifende Sicken und/oder eine Randumstellung bzw. Bördelung vorgesehen sein. Die Gegenstütze bzw. Befestigungsstrebe 29 kann in Materialstärke, Baugröße, Lage, Ausrichtung und Verbindungen auf eine Einhaltung und Optimierung der "lower leg"-Fußgängerschutzvorgaben unter Berücksichtigung der fahrzeugspezifischen Gegebenheiten abgestimmt werden. Die Gegenstütze bzw. Befestigungsstrebe 29 kann zur Gewichtsreduzierung partiell mit Löchern und/oder Ausschnitten versehen sein. Sie kann aus Kunststoff, Metall oder anderen leichten und zugleich ausreichend stabilen Materialien hergestellt werden. Auch die Gegenstütze bzw. Befestigungsstrebe 29 lässt sich als Einzelteil kundendienstfreundlich austauschen. Sie wird hierfür lediglich am Hilfsrahmen 63 bzw. an dessen Querstrebe 59 verklippst, verschweißt, vernietet und/oder verschraubt.

Die vorstehend erläuterte Erfindung gibt ein Verstärkungselement für einen unteren Stoßbereich eines Frontstoßfängers eines Kraftfahrzeugs zum Schutz von Fußgängern beim Aufprall eines unteren Beinabschnitts gegen den unteren Stoßbereich des Frontstoßfängers an. Das Verstärkungselement schließt sich dabei in Fahrtrichtung hinter dem unteren Frontstoßfängerbereich an diesen an. Das Verstärkungselement weist eine Grundplatte mit daran befestigten Verstärkungsrippen auf. Es erstreckt sich im wesentlichen in horizontaler Richtung, näherungsweise über die Breite des Frontstoßfängers. Dabei wird erstmals vorgeschlagen, dass das Verstärkungselement mit dem in Längsrichtung hinteren Ende zumindest teilweise gegen eine im Motorraum befindliche Querstrebe abgestützt ist. Ferner diskutiert die vorstehende Erfindung erstmals einen damit ausgerüsteten Frontstoßfänger für ein Kraftfahrzeug.

### Bezugszeichenliste

| | |
|---|---|
| Schale bzw. Verkleidung | 1 |
| Stoßfänger | 3 |
| oberer Stoßbereich | 5 |
| unterer Stoßbereich | 7 |
| Aussparung für Kennzeichen | 9 |
| Luftdurchlassöffnung für den Kühler | 11 |
| Öffnung für Beleuchtungsmittel | 13 |
| Öffnung für Beleuchtungsmittel | 15 |
| Verstärkungselement | 17 |
| Platte | 19 |
| Verstärkungsrippen | 21 |
| Vorderer schalenartiger Abschnitt von 7 | 23 |
| Vorderer Abschnitt von 17 | 25 |
| Hintere Arme von 17 | 27 |
| Befestigungsstrebe | 29 |
| Durchgangsbohrung | 31 |
| Befestigungsmittel (Niet, Schraube, ...) | 33 |
| Versteifungsrippen von 27 | 35 |
| Absorberelement | 37 |
| Querträger | 39 |
| Kühler | 41 |
| Lüfterrad von 41 | 43 |
| Luftdurchlassgitter | 45 |
| Motorraum | 47 |
| Rückseite von 17 | 49 |
| Grundplatte von 17 | 51 |
| Kühlerabweiseinrichtung | 53 |
| - | 55 |
| Schulter von 37 gegen 39 | 57 |
| Querstrebe | 59 |
| Hintere Kante von 17 | 61 |
| Hilfsrahmen | 63 |
| Halter bzw. Crash Boxen für 39 | 65 |
| Hinterer Endabschnitt von 17 | 67 |
| Einrastnase | 69 |
| Einrastöffnung | 71 |

## Patentansprüche

1. Verstärkungselement (17) für einen unteren Stoßbereich (7) eines Kraftfahrzeug-Frontstoßfängers (3) zum Schutz von Fußgängern beim Aufprall eines unteren Beinabschnitts gegen den unteren Bereich (7) des Frontstoßfängers (3), wobei das Verstärkungselement (17) sich in Fahrtrichtung (X) hinter dem unteren Bereich (7) des Frontstoßfängers (3) an diesen anschließt, eine Grundplatte (51) mit daran befestigten Verstärkungsrippen (21) aufweist, und sich im wesentlichen in horizontaler Richtung näherungsweise über die Breite des Frontstoßfängers (3) erstreckt und mit dem in Fahrtrichtung (X) hinteren Ende (61, 67) zumindest teilweise gegen eine unterhalb des Motorraums (47) angeordnete Querstrebe (59) abgestützt ist, **dadurch gekennzeichnet, dass** die Grundplatte (51) im in Fahrzeuglängsrichtung (X) hinteren Bereich kreuzförmig ausgebildete Verstärkungsrippen (27) aufweist, an die sich nach vorne hin parallel zueinander angeordnete, im wesentlichen in Längsrichtung (x) orientierten Längsrippen (21) anschließen.

2. Verstärkungselement nach Anspruch 1, **dadurch gekennzeichnet, dass** die Querstrebe (59) Teil eines an der Fahrzeugkarosserie angelenkten Hilfsrahmens (63) ist.

3. Verstärkungselement nach Anspruch 1 oder 2, **dadurch gekennzeichnet, dass** das Verstärkungselement (17) mittels Verkleben, Verklippsen, Verschweißen, Vernieten, Verschrauben oder dergleichen mittelbar oder unmittelbar an der Hilfsrahmenquerstrebe (59) befestigt ist.

4. Verstärkungselement nach einem der Ansprüche 1 bis 3, **dadurch gekennzeichnet, dass** das Verstärkungselement (17) sich mit dessen Rückseite (61, 67) zumindest abschnittsweise gegen die zugewandte Frontseite der Hilfsrahmenquerstrebe (59) abstützt und beide Bauteile (17, 59) mittels einer oberhalb und/oder unterhalb dieser beiden Bauteile (17, 59) angeordneten Befestigungsstrebe (29) miteinander verbunden sind.

5. Verstärkungselement nach einem der Ansprüche 1 bis 4, **dadurch gekennzeichnet, dass** das Verstärkungselement (17) als separate, in den unteren Stoßfängerbereich (7) integrierbare Platte (19) ausgebildet ist.

6. Verstärkungselement nach einem der Ansprüche 1 bis 5, **dadurch gekennzeichnet, dass** das Verstärkungselement (17) am unteren Stoßfängerbereich (7) montierbar ist, vorzugsweise mittels Verkleben, Verklippsen, Verschweißen, Vernieten, Verschrauben oder dergleichen.

7. Verstärkungselement nach einem der Ansprüche 1 bis 6, **dadurch gekennzeichnet, dass** die Verstärkungsrippen (21) sich von der oben liegenden, mit der Rückseite zum Motorraum (47) weisenden Grundplatte (51) nach unten erstrecken.

8. Verstärkungselement nach einem der Ansprüche 1 bis 7, **dadurch gekennzeichnet, dass** das Verstärkungselement (17) zumindest teilweise mit einem in Fahrtrichtung (X) vorderen Abschnitt (23) vom unteren Stoßfängerbereich (7) schalenartig umhüllt ist.

9. Verstärkungselement nach einem der Ansprüche 1 bis 8, **dadurch gekennzeichnet, dass** sich die Verstärkungsrippen (21) im wesentlichen rechtwinklig von der Grundplatte (51) erstrecken und aus dem selben Material einstückig an dieser angeformt sind.

10. Verstärkungselement nach einem der Ansprüche 1 bis 9, **dadurch gekennzeichnet, dass** in der Grundplatte (51) zwischen den Verstärkungsrippen (21) Befestigungspunkte, vorzugsweise Einrastnasen (69), ausgebildet sind.

11. Verstärkungselement nach einem der Ansprüche 1 bis 10, **dadurch gekennzeichnet, dass** die Befestigungspunkte in der Grundplatte (51) mit entsprechenden Befestigungspunkten in der Schale (1) des unteren Stoßfängerbereichs (7), die vorzugsweise als Einrastöffnungen (71) ausgebildet sind, korrelieren.

12. Verstärkungselement nach einem der Ansprüche 1 bis 11, **dadurch gekennzeichnet, dass** die Grundplatte (51) auf deren rückwärtiger, dem Motorraum (47) zugewandter Seite (49) eine Kühlerabweiseinrichtung (53) trägt.

13. Verstärkungselement nach einem der Ansprüche 1 bis 12, **dadurch gekennzeichnet, dass** es aus Kunststoff, vorzugsweise aus thermoplastischem Kunststoff, hergestellt ist.

14. Frontstoßfänger (3) für ein Kraftfahrzeug mit einem ersten Stoßbereich (5), der mit einer Stoßstange eines anderen Kraftfahrzeugs in Kontakt kommen soll, sowie einem unterhalb des ersten Stoßbereichs (5) angeordneten zweiten Stoßbereich (7), der mit einem Fußgänger mit dessen unteren Beinabschnitt in Kontakt kommen soll, wobei der Stoßfänger (3) eine äußere Schale (1) aufweist und sich im ersten Stoßbereich (5), vorzugsweise über ein dazwischen angeordnetes Absorberelement (37), gegen einen Querträger (39) abstützt, der mittels Crashboxen (65) oder dergleichen an den Längsträgern der Karosserie montiert ist, **dadurch gekennzeichnet, dass** in Fahrzeuglängsrichtung (X) hinter dem zweiten, unteren Stoßbereich (7) ein Verstärkungselement (17) nach einem der Ansprüche 1 bis 13 vorgesehen ist, das mit dessen in Fahrtrichtung (X) hinterem Ende (61, 67) zumindest teilweise gegen eine unterhalb des Motorraums (47) angeordnete Querstrebe (59) abgestützt ist.

## Claims

1. A reinforcement element (17) for a bottom bumper region (7) of a front bumper (3) of a motor vehicle for the protection of pedestrians during impact of a lower leg area against the bottom region (7) of the front bumper (3), with the reinforcement element (17) being disposed behind the bottom region (7) of the front bumper (3) in the direction of travel (X), having a base plate (51) with reinforcing ribs (21) fixed thereto, and extending substantially in the horizontal direction approximately over the width of the front bumper (3) and being supported with the end (61,67) which is at the rear in the direction of travel (X) at least partly against a cross member (59) arranged beneath the engine compartment (47), **characterized in that** the base plate (51) comprises reinforcing ribs (27) arranged in a crosswise manner in the region which is in the rear in the longitudinal direction (X) of the vehicle, adjacent to which are longitudinal ribs (21) which are oriented substantially in the longitudinal direction (x) and are arranged towards the front parallel with respect to each other.

2. A reinforcement element according to claim 1, **characterized in that** the cross member (59) is part of an auxiliary frame (63) linked to the vehicle body.

3. A reinforcement element according to claim 1 or 2, **characterized in that** the reinforcement element (17) is fastened directly or indirectly to the cross member (59) of the auxiliary frame by means of gluing, clipping together, welding, riveting, screwing or the like.

4. A reinforcement element according to one of the claims 1 to 3, **characterized in that** it rests with its rear side (61, 67) at least in sections on the facing front side of the cross member (59) of the auxiliary frame and both components (17, 59) are connected with each other by means of a fastening strut (29) arranged above and/or below said two components (17, 59).

5. A reinforcement element according to one of the claims 1 to 4, **characterized in that** the reinforcement element (17) is arranged as a separate plate (19) which can be integrated in the bottom bumper region (7).

6. A reinforcement element according to one of the claims 1 to 5, **characterized in that** the reinforcement element (17) can be mounted on the bottom bumper region (7), preferably by means of gluing, clipping together, welding, riveting, screwing or the like.

7. A reinforcement element according to one of the claims 1 to 6, **characterized in that** the reinforcing ribs (21) extend downwardly from the upwardly disposed base plate (51) which faces the engine compartment with the back side.

8. A reinforcement element according to one of the claims 1 to 7, **characterized in that** the reinforcement element (17) is encased by the bottom bumper region (7) at least partly in a shell-like manner with a section (23) which is at the front in the direction of travel (X).

9. A reinforcement element according to one of the claims 1 to 8, **characterized in that** the reinforcing ribs (21) extend in a substantially rectangular way from the base plate (51) and are formed on the same in an integral way from the same material.

10. A reinforcement element according to one of the claims 1 to 9, **characterized in that** fastening points, preferably latching noses (69), are formed in the base plate (51) between the reinforcing ribs (21).

11. A reinforcement element according to one of the claims 1 to 10, **characterized in that** the fastening points correlate with respective fastening points in the shell (1) of the bottom bumper region (7) which are preferably arranged as latching openings (71).

12. A reinforcement element according to one of the claims 1 to 11, **characterized in that** the base plate (51) comprises a radiator deflection device (53) on its rear side (49) facing the engine compartment (47).

13. A reinforcement element according to one of the claims 1 to 12, **characterized in that** it is made of plastic, preferably of a thermoplastic material.

14. A front bumper (3) for a motor vehicle, comprising a first bumper region (5) which is to come into contact with a bumper of another motor vehicle, and a second bumper region (7) which is arranged beneath the first bumper region (5) which is to come into contact with the lower leg area of a pedestrian, with the bumper (3) having an outer shell (1) and resting in the first bumper region (5), preferably via an interposed absorber element (37), on a cross member (39) which is mounted by means of crash boxes (65) or the like on the side members of the body, **characterized in that** a reinforcement element (17) according to one of the claims 1 to 13 is provided in the longitudinal direction (X) behind the second bottom bumper region (7), which is supported with its end (61, 67) at the rear in the direction of travel (X) at least partly on a cross member (59) arranged beneath the engine compartment (47).

## Revendications

1. Élément de renfort (17) pour une zone d'impact inférieure (7) d'un pare-chocs avant (3) de véhicule assurant la protection de piétons lors de la collision d'une partie inférieure des jambes contre la partie inférieure (7) du pare-chocs avant (3), lequel élément de renfort (17) se raccorde à la partie inférieure (7) du pare-chocs avant (3) derrière celle-ci dans le sens de la marche (X), présente une plaque de base (51) avec des nervures de renfort (21) fixées à celle-ci et s'étend sensiblement à l'horizontale à peu près sur la largeur du pare-chocs avant (3) et est soutenu par l'extrémité arrière (61, 67) dans le sens de la marche (X) au moins partiellement contre une traverse (59) disposée en dessous du compartiment moteur (47), **caractérisé en ce que** la plaque de base (51) présente des nervures raidisseuses (27) en forme de croix dans la partie arrière dans le sens longitudinal du véhicule (X), auxquelles se raccordent des nervures longitudinales (21) parallèles les unes aux autres vers l'avant et orientées sensiblement dans le sens longitudinal (x).

2. Élément de renfort selon la revendication 1, **caractérisé en ce que** la traverse (59) fait partie d'un châssis auxiliaire (63) articulé sur la carrosserie du véhicule.

3. Élément de renfort selon la revendication 1 ou 2, **caractérisé en ce que** l'élément de renfort (17) est fixé indirectement ou directement sur la traverse de châssis auxiliaire (59) par collage, clipsage, soudage, rivetage, vissage ou similaire.

4. Élément de renfort selon l'une des revendications 1 à 3, **caractérisé en ce que** l'élément de renfort (17) s'appuie au moins par endroits par sa face arrière (61, 67) contre la face avant tournée vers lui de la traverse de châssis auxiliaire (59) et les deux pièces (17, 59) sont reliées l'une à l'autre par un jambage de fixation (29) disposé au-dessus/ou en dessous de ces deux pièces (17, 59).

5. Élément de renfort selon l'une des revendications 1 à 4, **caractérisé en ce que** l'élément de renfort (17) est conformé commune plaque (19) séparée, pouvant être intégrée dans la partie inférieure du pare-chocs (7).

6. Élément de renfort selon l'une des revendications 1 à 5, **caractérisé en ce que** l'élément de renfort (17) peut être monté sur la partie inférieure du pare-chocs (7), de préférence par collage, clipsage, soudage, rivetage, vissage ou similaire.

7. Élément de renfort selon l'une des revendications 1 à 6, **caractérisé en ce que** les nervures raidisseuses (21) s'étendent à partir de la plaque de base (51) située au-dessus et orientée sur sa face arrière vers le compartiment moteur (47).

8. Élément de renfort selon l'une des revendications 1 à 7, **caractérisé en ce que** l'élément de renfort (17) est au moins partiellement enveloppé à la manière d'une coque par une partie (23) de la partie inférieure du pare-chocs (7) située sur l'avant dans le sens de la marche (X).

9. Élément de renfort selon l'une des revendications 1 à 8, **caractérisé en ce que** les nervures de renfort (21) sont sensiblement perpendiculaires à la plaque de base (51) et sont formées sur celles-ci d'un seul tenant à partir du même matériau.

10. Élément de renfort selon l'une des revendications 1 à 9, **caractérisé en ce que** des points de fixation, de préférence des ergots d'emboîtement (69), sont formés dans la plaque de base (51) entre les nervures de renfort (21).

11. Élément de renfort selon l'une des revendications 1 à 10, **caractérisé en ce que** les points de fixation dans la plaque de base (51) correspondent à des points de fixation correspondants dans la coque (1) de la partie inférieure du pare-chocs (7), qui sont de préférence conformées comme des ouvertures d'engagement (71).

12. Élément de renfort selon l'une des revendications 1 à 11, **caractérisé en ce que** la plaque de base (51) porte sur sa face arrière (49) orientée vers le compartiment moteur (47) un dispositif déviant le radiateur (53).

13. Élément de renfort selon l'une des revendications 1 à 12, **caractérisé en ce qu'**il est fabriqué en matière plastique, de préférence en matière thermoplastique.

14. Pare-chocs avant (3) pour un véhicule à moteur avec une première zone d'impact (5) destinée à venir en contact avec un pare-chocs d'un autre véhicule, ainsi qu'une deuxième zone d'impact (7) disposée en dessous de la première zone d'impact (5), destinée à venir en contact avec un piéton dans la partie inférieure des jambes de celui-ci, lequel pare-chocs (3) présente une coque extérieure (1) et s'appuie dans la première zone d'impact (5), de préférence par l'intermédiaire d'un élément absorbeur (37) intercalée entre eux, contre une traverse (39) qui est montée sur les longerons de la carrosserie au moyen de caissons déformables (65) ou similaires, **caractérisé en ce qu'**un élément de renfort (17) selon l'une des revendications 1 à 13 est prévu derrière la deuxième partie inférieure du pare-chocs (7) dans le sens longitudinal du véhicule (X), lequel s'appuie par son extrémité (61, 67) arrière dans le sens de la marche (X), au moins partiellement, contre une traverse (59) disposée en dessous du compartiment moteur (47).
